# EUROPEAN PATENT APPLICATION

(11) **EP 3 745 237 A1**
(43) Date of publication of application: **02.12.2020**
(21) Application number: 19177693.9
(22) Date of filing: 31.05.2019
(51) Int. Cl.: G06F 3/01, G06F 3/0481, G06T 13/40, G06T 15/00, G06F 3/0484

(54) **RENDERING AN IMAGE ON A VIRTUAL USER INTERFACE OF AN AUGMENTED OR VIRTUAL REALITY DEVICE**

(71) Applicant: Koninklijke Philips N.V., 5656 AG Eindhoven (NL)
(72) Inventor: TALGORN, Elise Claude Valentine, 5656 AE Eindhoven (NL); DJAJADININGRAT, Johan Partomo, 5656 AE Eindhoven (NL); LAUTE, Niels, 5656 AE Eindhoven (NL)
(74) Representative: de Haan, Poul Erik

(57) **Abstract**

There is provided an apparatus (100) that comprises one or more processors (102) configured to acquire information indicative of a movement of a first user, detect a gesture performed by a part of the body of the first user in relation to a virtual object in a first image rendered on a first virtual user interface (UI) of a first augmented reality (AR) or virtual reality (VR) device used by the first user and control a second virtual UI of a second AR or VR device used by a second user facing the first user to render a second image comprising a modified representation of the virtual object and/or a modified representation of at least the part of the body of the first user, such that the gesture performed by the part of the body of the first user is in relation to the virtual object in the second image.

## Description

### FIELD OF THE INVENTION

The disclosure relates to a computer-implemented method and apparatus for rendering an image on a virtual user interface of an augmented reality (AR) device or a virtual reality (VR) device.

### BACKGROUND OF THE INVENTION

It is expected that, in the future, virtual interfaces (such as those used for AR, VR, holograms, projection, etc.) will become omnipresent. These virtual interfaces will augment the world with extra data to provide information to individual users as well as to support discussions between several users by enabling them to naturally share information.

In some cases, where multiple users are interacting with the same virtual interface, they may be located on the same side of the virtual interface. As such, the users view the same image in the same direction on the virtual interface. In other cases, where the users are having a discussion based on an image displayed on a virtual interface, the users may prefer to stand or sit in front of each other, rather than side-by-side. In these cases, the users are on opposite sides of the virtual interface. That is, the virtual interface is positioned between the users. However, the issue then is that one of the users has to view the content of the image (e.g. text, anatomy, schematics, etc.) in reverse in the case of a vertical virtual interface or upside down in the case of a horizontal virtual interface, which is inconvenient and confusing for that user.

This can be avoided by the users using individual AR or VR devices to display virtual information. In this way, all users can be presented with the same images in the same direction and orientation. US 9,384,594 discloses an example of such an arrangement, where a first user wears a first head mounted device and a second user sitting across from the first user wears a second head mounted device. The first head mounted device generates a horizontal display of an image comprising a virtual object. The second head mounted device also generates a horizontal display of the image comprising the virtual object but reoriented such that the image appears right side up and with the proper perspective for the second user. For two users to discuss the content on the display, it is useful if the virtual display is at the same position for both users, so that their gaze and gestures are directed at the same spot.

However, as the first and second users are facing each other, when the first user performs a gesture in relation to the virtual object in the image that the first user is viewing on their AR or VR device, the gesture will appear to the second user to be in relation to the wrong virtual object in the image that the second user is viewing on their AR or VR device. For example, if the first user points to a virtual object in the bottom right of the image that the first user is viewing on their AR or VR device, it will appear to the second user that the first user is pointing to a virtual object in the top left of the image that the second user is viewing on their AR or VR device. The vectorial frames of reference of users that are facing each other are in opposite directions. Thus, the virtual object indicated by the first user will not match the virtual object that the second user sees the first user indicating. This makes it extremely difficult, if not impossible, for the second user to comprehend the gestures of the first user.

### SUMMARY OF THE INVENTION

As noted above, the limitations with existing techniques is that it is difficult for a second user facing a first user to comprehend the gestures of the first user due to the fact that the virtual object indicated by the first user will not match the virtual object that the second user sees the first user indicating. It would thus be valuable to have an improvement aimed at addressing these limitations.

Therefore, according to a first aspect, there is provided an apparatus for rendering an image on a virtual user interface of an augmented reality (AR) device or a virtual reality (VR) device. The apparatus comprises one or more processors. One or more processors are configured to acquire, from at least one sensor, information indicative of a movement of a first user and detect, from the acquired information, a gesture performed by a part of the body of the first user in relation to a virtual object in a first image rendered on a first virtual user interface of a first AR or VR device used by the first user. One or more processors are configured to control a second virtual user interface of a second AR or VR device used by a second user facing the first user to render a second image comprising a modified representation of the virtual object and/or a modified representation of at least the part of the body of the first user that performs the gesture, such that the gesture performed by the part of the body of the first user is in relation to the virtual object in the second image.

In some embodiments, the modified representation of the virtual object in the second image may comprise a representation of at least a part of the virtual object that is mirrored and/or offset with respect to the virtual object in the first image and/or the modified representation of at least the part of the body of the first user that performs the gesture in the second image may comprise a representation of at least the part of the body the first user that performs the gesture that is mirrored and/or offset with respect to at least the part of the body the first user that performs the gesture.

In some embodiments, one or more processors may be configured to control the second virtual user interface to render at least the part of the body of the first user that performs the gesture in the second image replaced with the modified representation of at least the part of the body of the first user that performs the gesture.

In some embodiments, one or more processors may be configured to control the second virtual user interface to render the second image with the virtual object located at a modified position in the second image compared to the positon of the virtual object in the first image or control the second virtual user interface to render the second image with at least the part of the body of the first user that performs the gesture located at a modified position in the second image compared to the positon of at least the part of the body of the first user that performs the gesture.

In some embodiments, one or more processors may be configured to control the second virtual user interface to render the second image with the virtual object orientated at a modified orientation in the second image compared to the orientation of the virtual object in the first image and/or control the second virtual user interface to render the second image with at least the part of the body of the first user that performs the gesture orientated at a modified orientation in the second image compared to the orientation of at least the part of the body of the first user that performs the gesture.

In some embodiments, one or more processors may be configured to control the second virtual user interface to render the second image with the part of the body of the first user that performs the gesture moving in a modified direction in the second image compared to the direction in which the part of the body of the first user that performs the gesture moves. In some embodiments, the modified direction of the part of the body of the first user that performs the gesture in the second image may be opposite to the direction in which the part of the body of the first user that performs the gesture moves.

In some embodiments, one or more processors may be configured to control the second virtual user interface to render the second image with altered pixels to render the second image comprising the modified representation of the virtual object and/or the modified representation of at least the part of the body of the first user that performs the gesture.

In some embodiments, one or more processors may be configured to control the second virtual user interface to render the second image comprising a modified representation of the eyes of the first user, such that the eyes of the first user are directed toward the virtual object in the second image. In some embodiments, one or more processors may be configured to control the second virtual user interface to render the second image comprising a modified representation of the whole body of the first user including the part of the body of the first user that performs the gesture.

In some embodiments, the first AR or VR device may comprise a first pair of AR or VR glasses worn by the first user and/or the second AR or VR device may comprise a second pair of AR or VR glasses worn by the second user. In some embodiments, the at least one sensor may comprise any one or more of: one or more cameras of the first AR or VR device used by the first user and one or more wearable sensors worn on the part of the body of the first user that performs the gesture. In some embodiments, the gesture may comprise a gesture having a horizontal displacement and/or a vertical displacement.

According to a second aspect, there is provided a method for rendering an image on a virtual user interface of an AR device or a VR device. The method comprises acquiring, from at least one sensor, information indicative of a movement of a first user and detecting, from the acquired information, a gesture performed by a part of the body of the first user in relation to a virtual object in a first image rendered on a first virtual user interface of a first AR or VR device used by the first user. The method also comprises controlling a second virtual user interface of a second AR or VR device used by a second user facing the first user to render a second image comprising a modified representation of the virtual object and/or a modified representation of at least the part of the body of the first user that performs the gesture, such that the gesture performed by the part of the body of the first user is in relation to the virtual object in the second image.

According to a third aspect, there is provided a computer program product comprising a computer readable medium. The computer readable medium has computer readable code embodied therein. The computer readable code is configured such that, on execution by a suitable computer or processor, the computer or processor is caused to perform the method described earlier.

According to the aspects and embodiments described above, the limitations of existing techniques are addressed. In particular, according to the above-described aspects and embodiments, when the first user performs a gesture in relation to the virtual object in the image that the first user is viewing on their AR or VR device, the gesture appears to the second user to be in relation to the correct virtual object in the image that the second user is viewing on their AR or VR device. The virtual object indicated by the first user matches the virtual object that the second user sees the first user indicating. This makes it possible for the second user to easily comprehend the gestures of the first user. There is thus provided an improved technique for rendering an image on a virtual user interface of an AR device or a VR device, which enables multi-user interaction.

These and other aspects will be apparent from and elucidated with reference to the embodiment(s) described hereinafter.

### BRIEF DESCRIPTION OF THE DRAWINGS

Exemplary embodiments will now be described, by way of example only, with reference to the following drawings, in which:
Fig. 1 is a schematic illustration of an apparatus according to an embodiment;
Fig. 2 is a flow chart illustrating a method according to an embodiment;
Fig. 3 is a schematic illustration of a virtual user interface in use according to an embodiment;
Fig. 4 is a schematic illustration of a virtual user interface in use according to an embodiment;
Fig. 5 is a schematic illustration of a virtual user interface in use according to an embodiment;
Fig. 6 is a schematic illustration of a virtual user interface in use according to an embodiment; and
Fig. 7 is a schematic illustration of a virtual user interface in use according to an embodiment.

### DETAILED DESCRIPTION OF EMBODIMENTS

As noted above, there is provided herein an improved technique for rendering an image (e.g. a two-dimensional image or a three-dimensional image) on a virtual user interface of an augmented reality (AR) device or a virtual reality (VR) device. The term "image" referred to herein can, for example, be a single image or a plurality of images, e.g. a sequence of images such as a video or video feed. An image can comprise information, such as any information that is to be shared between users. Thus, the improved technique can be an improved technique for sharing information between users. The term "virtual user interface" referred to herein can, for example, be a virtual screen or a virtual display.

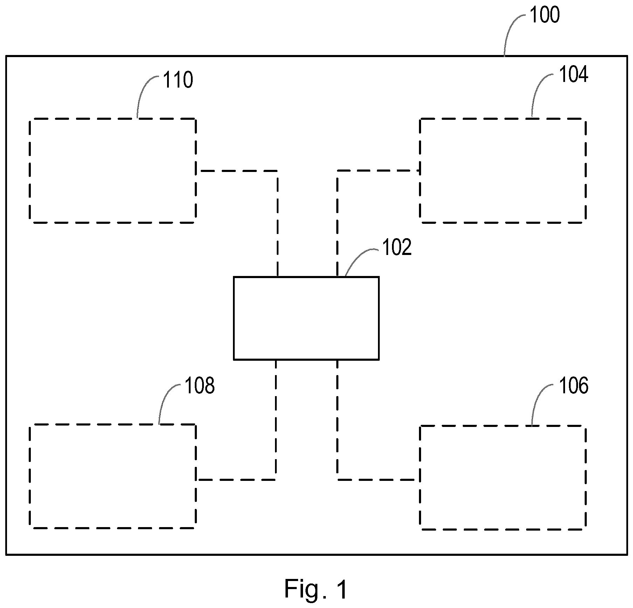

Fig. 1 illustrates an apparatus 100 for rendering an image on a virtual user interface of an AR device or a VR device according to an embodiment. As illustrated in Fig. 1, the apparatus 100 comprises one or more processors 102. The one or more processors 102 can be implemented in numerous ways, with software and/or hardware, to perform the various functions described herein. In particular implementations, the one or more processors 102 can comprise a plurality of software and/or hardware modules, each configured to perform, or that are for performing, individual or multiple steps of the method described herein. The one or more processors 102 may comprise, for example, one or more microprocessors, one or more multi-core processors and/or one or more digital signal processors (DSPs), one or more processing units, and/or one or more controllers (e.g. one or more microcontrollers) that may be configured or programmed (e.g. using software or computer program code) to perform the various functions described herein. The one or more processors 102 may be implemented as a combination of dedicated hardware (e.g. amplifiers, pre-amplifiers, analog-to-digital convertors (ADCs) and/or digital-to-analog convertors (DACs)) to perform some functions and one or more processors (e.g. one or more programmed microprocessors, DSPs and associated circuitry) to perform other functions.

Briefly, one or more processors 102 are configured to, acquire, from at least one sensor 104, information indicative of a movement of a first user and detect, from the acquired information, a gesture performed by a part of the body of the first user in relation to a virtual object in a first image rendered (e.g. displayed) on a first virtual user interface of a first AR or VR device used by the first user. Also, one or more processors 102 are configured to control a second virtual user interface of a second AR or VR device used by a second user facing the first to render (e.g. display) a second image comprising a modified representation of the virtual object and/or a modified representation of at least the part of the body of the first user that performs the gesture, such that the gesture performed by the part of the body of the first user is in relation to the virtual object in the second image.

In some embodiments, the first AR or VR device can comprise the apparatus 100 described herein. Alternatively or in addition, the second AR or VR device can comprise the apparatus 100 described herein. Alternatively, the apparatus 100 described herein may be a separate apparatus to the first AR or VR device and/or the second AR or VR device. In some embodiments, the first AR or VR device referred to herein may comprise a pair of AR or VR glasses worn by the first user, a mobile device (e.g. phone, smartphone, tablet, etc.) used by the first user, an AR or VR headset (e.g. with cameras) worn by the first user, or any other type of AR or VR device. Alternatively or in addition, in some embodiments, the second AR or VR device may comprise a pair of AR or VR glasses worn by the second user, a mobile device (e.g. phone, smartphone, tablet, etc.) used by the second user, an AR or VR headset (e.g. with cameras) worn by the second user, or any other type of AR or VR device.

The term "gesture" referred to herein can be any gesture or any combination of gestures. A gesture can comprise any (e.g. recognizable) movement of the body of the first user. A gesture can, for example, comprise one or more gestures of a hand or a digit (e.g. one or more fingers and/or the thumb) of a hand of the first user. Examples of a gesture include, but are not limited to, a pointing gesture, a tapping gesture, a pressing gesture, a scrolling gesture, a dragging gesture, a spreading gesture, a pinching gesture, a sliding gesture, a circling gesture, or any other gesture, or any combination of gestures. The gesture may comprise a gesture having a horizontal displacement and/or a vertical displacement. For example, a gesture may comprise a symmetrical gesture, such as a gesture that has zero horizontal displacement (e.g. pointing, tapping, pressing, vertical scrolling, vertical dragging, vertical spreading, etc.). Alternatively or in addition, a gesture may comprise an asymmetrical gesture, such as a gesture that has a non-zero horizontal displacement (e.g. circling, horizontal scrolling, dragging, spreading, pinching, etc.).

As illustrated in Fig. 1, in some embodiments, the apparatus 100 may comprise at least one sensor 104, which is configured to obtain the information indicative of a movement of a first user. Alternatively or in addition, in some embodiments, at least one sensor 104 configured to obtain the information indicative of a movement of a first user may be external to (e.g. separate to or remote from) the apparatus 100. For example, another apparatus may comprise at least one sensor 104 according to some embodiments. In some embodiments, any one or more of the first AR or VR device and the second AR or VR device may comprise at least one sensor 104. The at least one sensor 104 can, for example, comprise a motion (or movement) sensor. In some embodiments, the at least one sensor 104 may comprise one or more cameras and/or one or more wearable sensors worn on the part (e.g. a hand) of the body of the first user that performs the gesture.

As illustrated in Fig. 1, in some embodiments, the apparatus 100 may comprise at least one memory 106. Alternatively or in addition, in some embodiments, at least one memory 106 may be external to (e.g. separate to or remote from) the apparatus 100. For example, another apparatus may comprise at least one memory 106 according to some embodiments. In some embodiments, a hospital database may comprise at least one memory 106, at least one memory 106 may be a cloud computing resource, or similar. One or more processors 102 of the apparatus 100 may be configured to communicate with and/or connect to at least one memory 106. The at least one memory 106 may comprise any type of non-transitory machine-readable medium, such as cache or system memory including volatile and non-volatile computer memory such as random access memory (RAM), static RAM (SRAM), dynamic RAM (DRAM), read-only memory (ROM), programmable ROM (PROM), erasable PROM (EPROM), and electrically erasable PROM (EEPROM). In some embodiments, at least one memory 106 can be configured to store program code that can be executed by one or more processors 102 of the apparatus 100 to cause the apparatus 100 to operate in the manner described herein.

Alternatively or in addition, at least one memory 106 can be configured to store information required by or resulting from the method described herein. For example, at least one memory 106 may be configured to store the information indicative of the movement of the first user, the detected gesture, the first image and/or the second image, the modified representation, or any other information, or any combination of information, required by or resulting from the method described herein. One or more processors 102 of the apparatus 100 can be configured to control at least one memory 106 to store information required by or resulting from the method described herein.

As illustrated in Fig. 1, in some embodiments, the apparatus 100 may comprise at least one user interface 108. Alternatively or in addition, in some embodiments, at least one user interface 108 may be external to (e.g. separate to or remote from) the apparatus 100. One or more processors 102 of the apparatus 100 may be configured to communicate with and/or connect to at least one user interface 108. In some embodiments, one or more processors 102 of the apparatus 100 can be configured to control at least one user interface 108 to operate in the manner described herein.

A user interface 108 can be configured to render (or output, display, or provide) information required by or resulting from the method described herein. For example, in some embodiments, one or more user interfaces 108 may be configured to render (or output, display, or provide) any one or more of the first and/or second virtual user interface, the information indicative of the movement of the first user, the detected gesture, the first image and/or the second image, the modified representation, or any other information, or any combination of information, required by or resulting from the method described herein. Alternatively or in addition, one or more user interfaces 108 can be configured to receive a user input. For example, one or more user interfaces 108 may allow a user (e.g. the first user, second user, and/or another user) to manually or virtually (e.g. via the first virtual user interface and/or the second virtual user interface) enter information or instructions, interact with and/or control the apparatus 100. Thus, one or more user interfaces 108 may be any one or more user interfaces that enable the rendering (or outputting, displaying, or providing) of information and/or enables a user to provide a user input.

The user interface 108 may comprise one or more (virtual or real) components for this. For example, one or more user interfaces 108 may comprise one or more switches, one or more buttons, a keypad, a keyboard, a mouse, a display or display screen, a graphical user interface (GUI) such as a touch screen, an application (e.g. on a smart device such as a tablet, a smart phone, or any other smart device), or any other visual component, one or more speakers, one or more microphones or any other audio component, one or more lights (e.g. one or more light emitting diodes, LEDs), a component for providing tactile or haptic feedback (e.g. a vibration function, or any other tactile feedback component), a smart device (e.g. a smart mirror, a tablet, a smart phone, a smart watch, or any other smart device), or any other user interface, or combination of user interfaces. In some embodiments, one or more user interfaces that are controlled to render information may be the same as one or more user interfaces that enable the user to provide a user input.

As illustrated in Fig. 1, in some embodiments, the apparatus 100 may comprise at least one communications interface (or communications circuitry) 110. Alternatively or in addition, in some embodiments, at least one communications interface 110 may be external to (e.g. separate to or remote from) the apparatus 100. A communications interface 110 can be for enabling the apparatus 100, or components of the apparatus 100 (e.g. one or more processors 102, one or more sensors 104, one or more memories 106, one or more user interfaces 108 and/or any other components of the apparatus 100), to communicate with and/or connect to each other and/or one or more other components. For example, one or more communications interfaces 110 can be for enabling one or more processors 102 of the apparatus 100 to communicate with and/or connect to one or more sensors 104, one or more memories 106, one or more user interfaces 108 and/or any other components of the apparatus 100. Alternatively or in addition, one or more communications interfaces 110 can be for enabling one or more processors 102 of the apparatus 100 to communicate with and/or connect to the first AR or VR device and/or the second AR or VR device.

A communications interface 110 may enable the apparatus 100, or components of the apparatus 100, to communicate and/or connect in any suitable way. For example, one or more communications interfaces 110 may enable the apparatus 100, or components of the apparatus 100, to communicate and/or connect wirelessly, via a wired connection, or via any other communication (or data transfer) mechanism. In some wireless embodiments, for example, one or more communications interfaces 110 may enable the apparatus 100, or components of the apparatus 100, to use radio frequency (RF), Bluetooth, or any other wireless communication technology to communicate and/or connect.

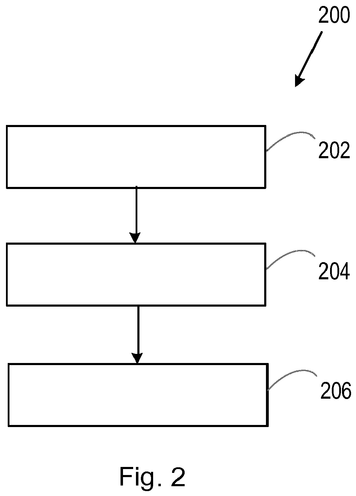

Fig. 2 illustrates a method 200 for rendering (e.g. displaying) an image on a virtual user interface of an augmented reality (AR) device or a virtual reality (VR) device according to an embodiment. More specifically, Fig. 2 illustrates a method 200 of operating the apparatus 100 described earlier with reference to Fig. 1 for rendering (e.g. displaying) an image on a virtual user interface of an AR or VR device. The method 200 illustrated in Fig. 2 is a computer-implemented method. As described earlier with reference to Fig. 1, the apparatus 100 comprises one or more processors 102. The method 200 illustrated in Fig. 2 can generally be performed by or under the control of one or more processors 102 of the apparatus 100 described earlier with reference to Fig. 1.

With reference to Fig. 2, at block 202, information indicative of a movement of a first user is acquired from at least one sensor 104. More specifically, one or more processors 102 of the apparatus 100 acquire information indicative of a movement of a first user from at least one sensor 104.

At block 204, a gesture performed by a part of the body of the first user in relation to a virtual object in a first image rendered (e.g. displayed) on a first virtual user interface of a first AR or VR device used by the first user is detected from the acquired information. More specifically, one or more processors 102 of the apparatus 100 detect, from the acquired information, a gesture performed by a part of the body of the first user in relation to a virtual object in a first image rendered (e.g. displayed) on a first virtual user interface of a first AR or VR device used by the first user. The first image is rendered (e.g. displayed) in the field of view of the first user. The gesture performed by the part of the body of the first user is detected in relation to the first virtual user interface. A person skilled in the art will be aware of various techniques that may be used to detect the gesture in relation to a user interface. However, some examples of techniques that may be used to detect the gesture include skeletal tracking, posture detection, computer vision, or any other technique suitable for detecting a gesture.

By detecting the gesture performed by the part of the body of the first user in relation to the virtual object in the first image, one or more processors 102 of the apparatus 100 can calculate the manner in which to modify (or manipulate) a representation of the virtual object and/or a representation of at least the part of the body of the first user that performs the gesture for rendering (e.g. displayed) on the second virtual user interface of the second AR or VR device used by the second user facing the first user in order for the gesture performed by the part of the body of the first user to be in relation to the virtual object in the second image (when viewed by the second user). More specifically, one or more processors 102 of the apparatus 100 can remodel the virtual object and/or at least the part of the body of the first user that performs the gesture on the second virtual user interface such that the gesture makes sense to the second user.

At block 206, a second virtual user interface of a second AR or VR device used by a second user facing the first user is controlled to render (e.g. display) a second image comprising a modified representation of the virtual object and/or a modified representation of at least the part of the body of the first user that performs the gesture, such that the gesture performed by the part of the body of the first user is in relation to the virtual object in the second image. More specifically, one or more processors 102 of the apparatus 100 control the second virtual user interface in this way. One or more processors 102 of the apparatus 100 may, for example, be configured to control the second AR or VR device used by the second user facing the first user to render (e.g. display) the modified representation of the virtual object and/or the modified representation of at least the part of the body of the first user that performs the gesture as an overlay on the second image. In this way, the second image can be manipulated in real time. The second image is rendered (e.g. displayed) in the field of view of the second user. The first user and the second user effectively observe the same image (the first and second image respectively) but the second user observes the image with one or more elements manipulated such that the gesture of the first user is understandable.

Herein, a second user may be facing the first user when the first user is in the field of view (e.g. approximately 114° for binocular vision) of the second user. In some embodiments, although not illustrated in Fig. 2, one or more processors 102 of the apparatus 100 can be configured to recognize or detect that the first and second users are facing each other, such as from gaze tracking. For example, it may be detected that the users are facing each other when it is detected that the users are looking at each other (e.g. at each other's faces and/or eyes) and/or eyes. The determination can be made by analyzing one or more images of the first and second users (e.g. acquired from a camera). Alternatively or in addition, in some embodiments, one or more processors 102 of the apparatus 100 can be configured to recognize or detect that the first user and the second user are sharing information on their respective first and second virtual user interfaces.

Thus, the apparatus 100 and method 200 described herein is aimed at a use case in which two (or more) users are facing each other and are each viewing a virtual user interface of an AR or VR device or representations of two (or more) users facing each other in a virtual world where their representations comprise a representation of their gestures in the real world. Each user may perform one or more gestures in a vectorial frame of reference that is oriented in the same manner as a vectorial frame of reference of their respective user interface (e.g. which can be configured to display information). In existing techniques, the vectorial frames of reference of facing users are in opposite directions, which makes it difficult, if not impossible, for a user to comprehend the gestures of another user facing them. This is addressed by way of the apparatus 100 and method 200 described herein, since the second virtual user interface is controlled to render a modified representation of the virtual object and/or a modified representation of at least the part of the body of the first user that performs the gesture in such a way that the first user appears to be performing the gesture in respect of the virtual object in the field of view (or vectorial frame of reference) of the second user. As the second virtual user interface is controlled to render one or more modified representations, the method 200 described herein may be referred to as an image modification (or image manipulation) method.

In some embodiments, the modified representation of the virtual object in the second image may comprise a representation of the virtual object (or at least a part of the virtual object) that is mirrored with respect to the virtual object in the first image. In some embodiments, for example, a direction (e.g. horizontal and/or vertical direction) of the virtual object may be modified in the second image. In an example, if the first and second users are looking at a virtual user interface from opposite sides and the virtual user interface comprises three buttons horizontally and vertically aligned, the order of the buttons will be different for the second user according to existing techniques. For example, the first user will see the order of buttons as Button 1, Button 2, Button 3, whereas the second user will see the order of buttons as Button 3, Button 2, Button 1. Thus, a second virtual user interface is controlled by one or more processors 102 of the apparatus 100 described herein such that a horizontal direction of the buttons are mirrored and thus the second user sees the buttons on the second virtual user interface in the same order as the first user sees the buttons on the first virtual user interface. In this way, when the first user taps a first button, this gesture of the first user is in line with the expectation of the second user, while maintaining readability.

Alternatively or in addition, the modified representation of at least the part of the body of the first user that performs the gesture in the second image may comprise a representation of at least the part of the body the first user that performs the gesture that is mirrored with respect to at least the (actual) part of the body the first user that performs the gesture. For example, the modified representation may be an inverse of the at least the (actual) part of the body the first user that performs the gesture. In this way, seamless transitions between the various reconstructed gestures can be achieved. For example, if the first user lifts their right arm to touch a virtual object that is horizontally aligned to the right in the first image, one or more processors 102 of the apparatus 100 may adapt the first image and reconstruct it for the second image so that, for the second user facing the first user, the first user appears to lift their left arm to touch the virtual object, and vice versa. This reconstruction of the first image can work well for a variety of applications. For example, it can be useful in the case of dashboards where sub-elements (such as graphs) can be moved without impacting the overall image meaning.

Alternatively or in addition, in some embodiments, the modified representation of the virtual object in the second image may comprise a representation of the virtual object that is offset with respect to the virtual object in the first image. This offset of the virtual object can work well for a variety of applications. For example, it can be useful in the case of images having asymmetrical features (such as images comprising text, anatomical images, etc.). Alternatively or in addition, the modified representation of at least the part of the body of the first user that performs the gesture in the second image may comprise a representation of at least the part of the body the first user that performs the gesture that is offset with respect to at least the (actual) part of the body the first user that performs the gesture. In some embodiments, the second image may be offset for symmetrical gestures. In an example, the shape of at least the part of the body of the first user that performs the gesture may be recognized and analyzed. The modified representation of at least the part of the body of the first user that performs the gesture may be offset to match the same location in the second image as in the first image.

For example, in the case of an arm of the first user performing a pointing gesture, the modified representation may comprise the arm of the first user performing a pointing gesture where the hand is offset to match the same point in the second image as in the first image. In order to provide a modified representation of at least the part of the body of the first user that performs the gesture, one or more joints associated with at least the part of the body of the first user that performs the gesture (e.g. shoulder, elbow, wrist, and/or finger joints in the case of an arm of the first user performing a pointing gesture) and/or the freedom of movements of the one or more joints may be analyzed. At least the part of the body of the first user that performs the gesture may be (realistically) reconstructed by, for example, modifying the torsion at the joints such that at least the end point (e.g. the finger tip that is performing the pointing gesture) is offset. In some embodiments, the transitions between movements may be simulated for a seamless view.

In some embodiments, one or more processors 102 of the apparatus 100 may be configured to control the second virtual user interface to render at least the part of the body of the first user that performs the gesture in the second image replaced with the modified representation of at least the part of the body of the first user that performs the gesture. For example, in some embodiments, the modified representation of the virtual object may comprise the original virtual object erased (e.g. by overlaying an image of the background onto the original virtual object) in the second image and a representation of the original virtual object added at another location in the second image. Alternatively or in addition, for example, the modified representation of at least the part of the body of the first user that performs the gesture may comprise the original at least the part of the body of the first user erased (e.g. by overlaying an image of the background and/or a part of the body of the first user onto the at least the part of the body of the first user) in the second image and a representation of the original at least the part of the body of the first user added at another location in the second image. The location of the representation of the original virtual object and/or the location of the representation of the original at least the part of the body of the first user is appropriate for the gesture performed by the part of the body of the first user to be in relation to the virtual object in the second image.

In some embodiments, one or more processors 102 of the apparatus 100 may be configured to control the second virtual user interface to render the second image with altered pixels to render the second image comprising the modified representation of the virtual object and/or the modified representation of at least the part of the body of the first user that performs the gesture. This can be performed after the modified representation of the virtual object and/or the modified representation of at least the part of the body of the first user that performs the gesture has been calculated. Thus, the pixels, e.g. the RGB (red, green, and blue) pixels, may be altered in the second image to render the modified representation of the virtual object and/or the modified representation of at least the part of the body of the first user that performs the gesture according to some embodiments. In this way, the first user can be remodeled for the second user such that the movements (or, more specifically, the gestures) of the first user make sense to the second user.

In some embodiments, one or more processors 102 of the apparatus 100 may be configured to control the second virtual user interface to render the second image with the virtual object in the second image located at a modified position in the second image compared to the positon of the virtual object in the first image. Alternatively, in some embodiments, one or more processors 102 of the apparatus 100 may be configured to control the second virtual user interface to render the second image with at least the part of the body of the first user that performs the gesture in the second image located at a modified position in the second image compared to the positon of at least the part of the body of the first user that performs the gesture.

In some embodiments, one or more processors 102 of the apparatus 100 may be configured to control the second virtual user interface to render the second image with the virtual object in the second image orientated at a modified orientation in the second image compared to the orientation of the virtual object in the first image. Alternatively or in addition, in some embodiments, one or more processors 102 of the apparatus 100 may be configured to control the second virtual user interface to render the second image with at least the part of the body of the first user that performs the gesture in the second image orientated at a modified orientation in the second image compared to the orientation of at least the part of the body of the first user that performs the gesture.

In some embodiments, one or more processors 102 of the apparatus 100 may be configured to control the second virtual user interface to render the second image with the part of the body of the first user that performs the gesture moving in a modified direction in the second image compared to the direction in which the part of the body of the first user that performs the gesture moves. In some of these embodiments, the modified direction of the part of the body of the first user that performs the gesture in the second image may be opposite to the direction in which the part of the body of the first user that performs the gesture moves.

In some embodiments, one or more processors 102 of the apparatus 100 may be configured to control the second virtual user interface to render the second image comprising a modified representation of the eyes of the first user, such that the eyes of the first user are directed toward the virtual object in the second image. In some embodiments, one or more processors 102 of the apparatus 100 may be configured to control the second virtual user interface to render the second image comprising a modified representation of the whole body of the first user including the part of the body of the first user that performs the gesture. For example, the modified representation may comprise a representation of the whole body of the first user including the part of the body of the first user that performs the gesture that is mirrored with respect to the (actual) body the first user. That is, the modified representation may be an inverse of the whole body of the first user including the part of the body of the first user. In this way, seamless transitions between the various reconstructed gestures can be achieved. Moreover, it may be easier to mirror the whole body than only part of the body, hence the required computational power can be minimized in this way.

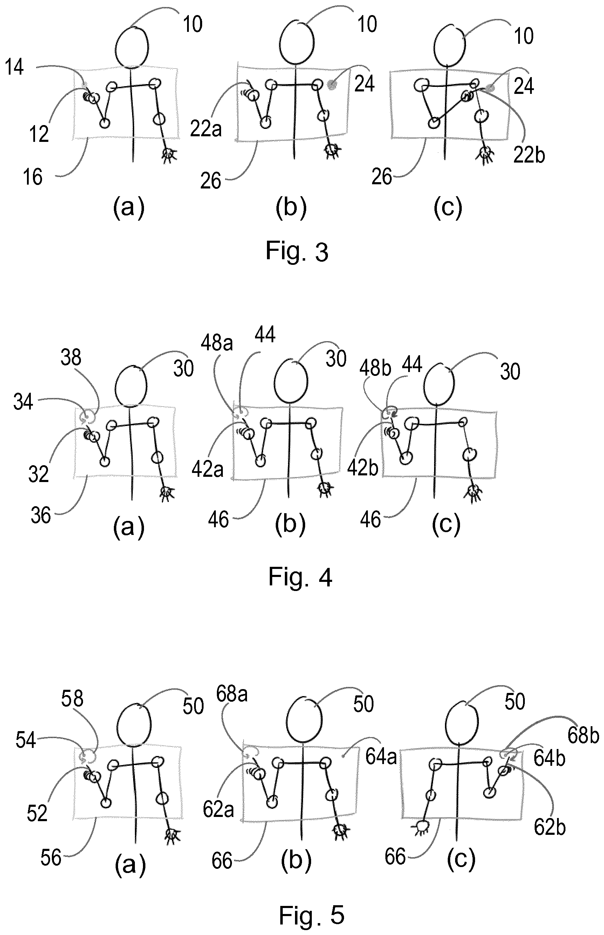

Fig. 3 illustrates an example virtual user interface in use according to an embodiment. In more detail, Fig. 3(a) illustrates a first user 10 performing a gesture with a part 12 of their body (which, in this example, is the finger of the first user 10) in relation to a virtual object 14 in a first image rendered on a first virtual user interface 16 of a first AR or VR device used by the first user 10. Fig. 3(b) illustrates a virtual object 24 in a second image rendered on a second virtual user interface 26 of a second AR or VR device used by a second user (not illustrated) that is facing the first user 10, according to existing techniques. Here, it can be seen that the gesture performed by the part 22a of the body of the first user 10 in relation to the virtual object 24 in the second image rendered on the second virtual user interface 26 is not viewed by the second user as being in relation to the virtual object 24 in the second image according to existing techniques.

Fig. 3(c) illustrates a virtual object 24 in the second image rendered on the second virtual user interface 26 of the second AR or VR device used by the second user (not illustrated) that is facing the first user 10, according to the apparatus 100 described herein. Here, it can be seen that the gesture performed by the part 22b of the body of the first user 10 in relation to the virtual object 24 in the second image rendered on the second virtual user interface 26 is viewed by the second user as being in relation to the virtual object 24 in the second image when using the apparatus 100 described herein.

In more detail, with reference to Fig. 3 and as described earlier, one or more processors 102 of the apparatus 100 described herein acquire, from at least one sensor 104, information indicative of a movement of the first user 10 and detect, from the acquired information, the gesture performed by the part 12 of the body of the first user 10 in relation to the virtual object 14 in the first image rendered on the first virtual user interface 16 of the first AR or VR device used by the first user 10, as illustrated in Fig. 3(a).

Also, one or more processors 102 of the apparatus 100 described herein control the second virtual user interface 26 of the second AR or VR device used by the second user facing the first user 10 to render the second image. As illustrated in Fig. 3(c), the second image rendered by the second virtual user interface 26 comprises a modified representation of the virtual object 24 and a modified representation of at least the part 22b of the body of the first user 10 that performs the gesture, such that the gesture performed by the part 22b of the body of the first user 10 is in relation to the virtual object 24 in the second image rendered by the second virtual user interface 26. In this way, the gesture is actually viewed by the second user as being in relation to the object 24 in the second image rendered by the second virtual user interface 26 as illustrated in Fig. 3(c) and not remote from the object 24 in the second image rendered by the second virtual user interface 26 as illustrated in Fig. 3(b).

As illustrated in Figs. 3(a) and (c), in this example, the modified representation of the virtual object 24 in the second image rendered by the second virtual user interface 26 comprises a representation of the virtual object that is mirrored with respect to the virtual object 14 in the first image rendered by the first virtual user interface 16. The modified representation of at least the part 22b of the body of the first user 10 that performs the gesture in the second image rendered by the second virtual user interface 26, as illustrated in Fig. 3(c), comprises a representation of the at least the part 22b of the body of the first user 10 that is modified with respect to at least the part 12 of the body of the first user 10 that performs the gesture moves, as illustrated in Fig. 3(a), and thus which is also modified with respect to the representation of the at least the part 22a of the body of the first user 10 of the second image rendered by the second virtual user interface 26 according to existing techniques, as illustrated in Fig. 3(b). In particular, as described earlier, the second image rendered by the second virtual user interface 26 when using the apparatus 100 described herein comprises a modified representation of at least the part 22b of the body of the first user 10 that performs the gesture.

Specifically, as illustrated in Figs. 3(a) and (c), the modified representation of at least the part 22b of the body of the first user 10 that performs the gesture in the second image when using the apparatus 100 described herein comprises a representation of at least the part of the body the first user 10 that performs the gesture that is offset with respect to at least the part 12 of the body the first user 10 that performs the gesture. Thus, as illustrated in Figs. 3(b) and (c), the modified representation of at least the part 22b of the body of the first user 10 that performs the gesture in the second image rendered by the second virtual user interface 26 when using the apparatus 100 described herein comprises a representation of at least the part of the body the first user 10 that performs the gesture that is also offset with respect to at least the part 22a of the body the first user 10 that performs the gesture in the second image rendered by the second virtual user interface 26 according to existing techniques. In this example, as illustrated in Fig, 3(c), one or more processors 102 of the apparatus 100 are configured to control the second virtual user interface 26 to render at least the part of the body of the first user 10 that performs the gesture in the second image replaced with the modified representation of at least the part 22b of the body of the first user 10 that performs the gesture.

The virtual object 24 in the second image rendered by the second virtual user interface 26 is located at a modified position in the second image compared to the positon of the virtual object 14 in the first image rendered by the first virtual user interface 16. Also, at least the part 22b of the body of the first user 10 that performs the gesture in the second image rendered by the second virtual user interface 26 is located at a modified position in the second image compared to the positon of at least the part 12 of the body of the first user 10 that performs the gesture. At least the part 22b of the body of the first user 10 that performs the gesture is also orientated at a modified orientation in the second image rendered by the second virtual user interface 26 compared to the orientation of at least the part 12 of the body of the first user 10 that performs the gesture. Thus, in this example, rather than the second user viewing the first user 10 as using a finger 22a of their right hand to their right side for the gesture as illustrated in Fig. 3(b), the second user views the first user 10 as using this finger 22b of their right hand to their left side (and across their body) for the gesture.

Fig. 4 illustrates an example virtual user interface in use according to an embodiment. In more detail, Fig. 4(a) illustrates a first user 30 performing a gesture with a part 32 of their body (which, in this example, is the finger of the first user 30) in relation to a virtual object 34 in a first image rendered on a first virtual user interface 36 of a first AR or VR device used by the first user 30. As illustrated in Fig. 4(a), the gesture is moving in a particular direction 38. Fig. 4(b) illustrates a virtual object 44 in a second image rendered on a second virtual user interface 46 of a second AR or VR device used by a second user (not illustrated) that is facing the first user 30, according to existing techniques. Here, it can be seen in Fig. 4(b) that the gesture is moving in a direction 48a in the second image that is the same as the direction 38 in which the part 32 of the body of the first user 30 that performs the gesture moves, as illustrated in Fig. 4(a), according to existing techniques. Thus, the second user sees the gesture that the first user 30 performs as moving in the same direction as that in which the first user 30 actually performs the gesture, according to existing techniques.

Fig. 4(c) illustrates a virtual object 44 in the second image rendered on the second virtual user interface 46 of the second AR or VR device used by the second user that is facing the first user 30, according to the apparatus 100 described herein. Here, it can be seen that gesture is moving in a modified direction 48b in the second image, as illustrated in Fig. 4(c), compared to the direction 38 in which the part 32 of the body of the first user 30 that performs the gesture moves, as illustrated in Fig. 4(a), when using the apparatus 100 described herein. Thus, the second user sees the gesture that the first user 30 performs as moving in a modified direction to that in which the first user 30 actually performs the gesture, when using the apparatus 100 described herein.

In more detail, with reference to Fig. 4 and as described earlier, one or more processors 102 of the apparatus 100 described herein acquire, from at least one sensor 104, information indicative of a movement of the first user 30 and detect, from the acquired information, the gesture performed by the part 32 of the body of the first user 30 in relation to the virtual object 34 in the first image rendered on the first virtual user interface 36 of the first AR or VR device used by the first user 30. Also, one or more processors 102 of the apparatus 100 described herein control the second virtual user interface 46 of the second AR or VR device used by the second user facing the first user 30 to render the second image. As illustrated in Fig. 4(c), the second image rendered by the second virtual user interface 46 comprises a modified representation of at least the part 42b of the body of the first user 30 that performs the gesture.

The modified representation of the second image rendered by the second virtual user interface 46, as illustrated in Fig. 4(c), comprises a representation of the at least the part 42b of the body of the first user 30 that is modified with respect to at least the part 32 of the body of the first user 30 that performs the gesture moves, as illustrated in Fig. 4(a), and thus which is also modified with respect to the representation of the at least the part 42a of the body of the first user 30 of the second image rendered by the second virtual user interface 46 according to existing techniques, as illustrated in Fig. 4(b). In particular, as described earlier, the second image rendered by the second virtual user interface 46 comprises a modified representation of at least the part 42b of the body of the first user 30 that performs the gesture, such that the gesture performed by the part 42b of the body of the first user 40 is in relation to the virtual object 44 in the second image.

Specifically, one or more processors 102 control the second virtual user interface 46 to render the second image with the part 42b of the body of the first user 30 that performs the gesture moving in a modified direction 48b in the second image compared to the direction 38 in which the part 32 of the body of the first user 30 that performs the gesture moves. In the example illustrated in Fig. 4(c), the modified direction 48b of the part 42b of the body of the first user 30 that performs the gesture in the second image is opposite to the direction 38 in which the part 32 of the body of the first user 30 that performs the gesture moves, as illustrated in Fig. 4(a). That is, the modified direction 48b of the part 42b of the body of the first user 30 that performs the gesture in the second image is opposite to the direction 38 in which the part 32 of the body of the first user 30 that performs the gesture actually moves. In some embodiments, the shape of the part 32 of the body of the first user 30 that performs the gesture may be recognized and analyzed, and a representation of the part 42b of the body of the first user 30 that performs the gesture may be rendered to move in the other direction 48b.

Fig. 5 illustrates an example virtual user interface in use according to an embodiment. In more detail, Fig. 5(a) illustrates a first user 50 performing a gesture with a part 52 of their body (which, in this example, is the finger of the first user 50) in relation to a virtual object 54 in a first image rendered on a first virtual user interface 56 of a first AR or VR device used by the first user 50. As illustrated in Fig. 5(a), the gesture is moving in a particular direction 58. Fig. 5(b) illustrates a virtual object 64 in a second image rendered on a second virtual user interface 66 of a second AR or VR device used by a second user (not illustrated) that is facing the first user 50, according to existing techniques. Here, it can be seen in Fig. 5(b) that the gesture is moving in a direction 68a in the second image that is the same as the direction 58 in which the part 52 of the body of the first user 50 that performs the gesture moves, as illustrated in Fig. 5(a), according to existing techniques. Thus, the second user sees the gesture that the first user 50 performs as moving in the same direction as that in which the first user 50 actually performs the gesture, according to existing techniques.

Fig. 5(c) illustrates a virtual object 64 in the second image rendered on the second virtual user interface 66 of the second AR or VR device used by the second user that is facing the first user 30, according to the apparatus 100 described herein. Here, it can be seen that gesture is moving in a modified direction 68b in the second image, as illustrated in Fig. 5(c), compared to the direction 58 in which the part 52 of the body of the first user 50 that performs the gesture moves, as illustrated in Fig. 5(a), when using the apparatus 100 described herein. Thus, the second user sees the gesture that the first user 50 performs as moving in a modified direction to that in which the first user 50 actually performs the gesture, when using the apparatus 100 described herein.

In more detail, with reference to Fig. 5 and as described earlier, one or more processors 102 of the apparatus 100 described herein acquire, from at least one sensor 104, information indicative of a movement of the first user 50 and detect, from the acquired information, the gesture performed by the part 52 of the body of the first user 50 in relation to the virtual object 54 in the first image rendered on the first virtual user interface 56 of the first AR or VR device used by the first user 50.

Also, one or more processors 102 of the apparatus 100 described herein control the second virtual user interface 66 of the second AR or VR device used by the second user facing the first user 50 to render the second image. As illustrated in Fig. 5(c), the second image rendered by the second virtual user interface 66 comprises a modified representation of the virtual object 64b and a modified representation of at least the part 62b of the body of the first user 50 that performs the gesture, such that the gesture performed by the part 62b of the body of the first user 50 is in relation to the virtual object 64b in the second image rendered by the second virtual user interface 66. In this way, the gesture is actually viewed by the second user as being in relation to the object 64b in the second image rendered by the second virtual user interface 66 as illustrated in Fig. 5(c) and not remote from the object 54 in the second image rendered by the second virtual user interface 66 as illustrated in Fig. 5(b)

As illustrated in Figs. 5(a) and (c), in this example, the modified representation of the virtual object 64b in the second image rendered by the second virtual user interface 66 comprises a representation of the virtual object that is mirrored with respect to the virtual object 54 in the first image rendered by the first virtual user interface 56. The modified representation of at least the part 62b of the body of the first user 50 that performs the gesture in the second image rendered by the second virtual user interface 66, as illustrated in Fig. 5(c), comprises a representation of the at least the part 62b of the body of the first user 50 that is modified with respect to at least the part 52 of the body of the first user 50 that performs the gesture moves, as illustrated in Fig. 5(a), and thus which is also modified with respect to the representation of the at least the part 62a of the body of the first user 50 of the second image rendered by the second virtual user interface 66 according to existing techniques, as illustrated in Fig. 5(b). In particular, as described earlier, the second image rendered by the second virtual user interface 66 comprises a modified representation of at least the part 62b of the body of the first user 50 that performs the gesture.

Specifically, as illustrated in Figs. 5(a) and (c), the modified representation of at least the part 62b of the body of the first user 50 that performs the gesture in the second image when using the apparatus 100 described herein comprises a representation of at least the part of the body the first user 50 that performs the gesture that is mirrored with respect to at least the part 52 of the body the first user 50 that performs the gesture. Thus, as illustrated in Figs. 5(b) and (c), the modified representation of at least the part 62b of the body of the first user 50 that performs the gesture in the second image rendered by the second virtual user interface 66 when using the apparatus 100 described herein comprises a representation of at least the part of the body the first user 50 that performs the gesture that is also mirrored with respect to at least the part 62a of the body the first user 50 that performs the gesture in the second image rendered by the second virtual user interface 66 according to existing techniques. In this example, as illustrated in Fig, 5(c), one or more processors 102 of the apparatus 100 are configured to control the second virtual user interface 66 to render at least the part of the body of the first user 50 that performs the gesture in the second image replaced with the modified representation of at least the part 62b of the body of the first user 50 that performs the gesture.

The virtual object 64b in the second image rendered by the second virtual user interface 66 is located at a modified position in the second image rendered by the second virtual interface 66 compared to the positon of the virtual object 54 in the first image rendered by the first virtual interface 56. Also, at least the part 62b of the body of the first user 50 that performs the gesture in the second image rendered by the second virtual user interface 66 is located at a modified position in the second image rendered by the second virtual interface 66 compared to the positon of at least the part 52 of the body of the first user 50 that performs the gesture. Thus, in this example, rather than the second user viewing the first user 50 as using a finger 62a of their right hand for the gesture as illustrated in Fig. 5(b), the second user views the first user 50 as using a finger 62b of their left hand for the gesture, such that the gesture is actually viewed by the second user as being in relation to the object 64b in the second image rendered by the second virtual user interface 66 as illustrated in Fig. 5(c) and not remote from the object 64a in the second image rendered by the second virtual user interface 66 as illustrated in Fig. 5(b).

In some embodiments, such as that illustrated in Fig. 5(c), the right and left arm of the first user 50 may be erased in the second image rendered by the second virtual user interface 66 (e.g. by overlaying a reconstruction of the background and/or part(s) of the user body onto the right and left arm) and a mirror image of the arms may instead be rendered (e.g. the right arm of the first user 50 rests virtually in the second image and the left arm of the first user 50 performs the gesture virtually in the second image).

Also, in the example illustrated in Fig. 5, one or more processors 102 control the second virtual user interface 66 to render the second image with the part 62b (which, in this example, is the right arm) of the body of the first user 50 that performs the gesture (which, in this example, is a circling gesture) moving in a modified direction 68b in the second image compared to the direction 58 in which the part 52 of the body of the first user 50 that performs the gesture moves. In the example illustrated in Fig. 5(c), the modified direction 68b of the part 62b of the body of the first user 50 that performs the gesture in the second image is opposite to the direction 58 in which the part 52 of the body of the first user 50 that performs the gesture moves, as illustrated in Fig. 5(a). That is, the modified direction 68b of the part 62b of the body of the first user 50 that performs the gesture in the second image is opposite to the direction 58 in which the part 52 of the body of the first user 50 that performs the gesture actually moves. In some embodiments, the shape of the part 52 of the body of the first user 50 that performs the gesture may be recognized and analyzed, and a representation of the part 62b of the body of the first user 50 that performs the gesture may be rendered to move in the other direction 68b.

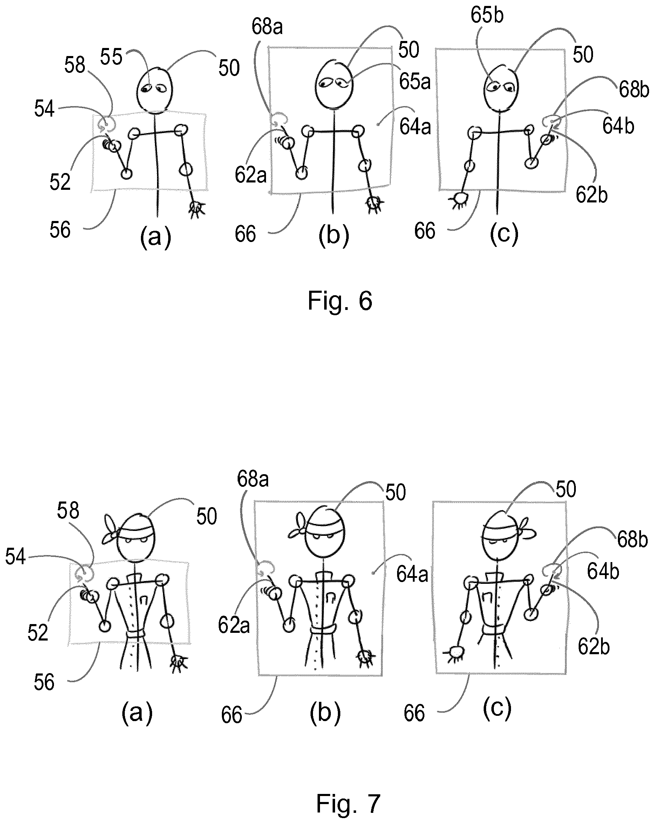

Fig. 6 illustrates an example virtual user interface in use according to an embodiment. The description with respect to Fig. 5 applies also to Fig. 6 and thus will not be repeated here but will be understood to apply. In addition, in the example illustrated in Fig. 6, one or more processors 102 of the apparatus 100 are configured to control the second virtual user interface 66 to render the second image comprising a modified representation of the eyes 65b of the first user 50. As illustrated in Fig. 6(c), the modified representation of the eyes 65b of the first user 50 comprises a representation of the eyes 65b of the first user 50 that is modified with respect to the eyes 55 of the first user 50, as illustrated in Fig. 6(a), and thus which is also modified with respect to the representation of the eyes 65a of the first user 50 in the second image rendered by the second virtual user interface 66 according to existing techniques, as illustrated in Fig. 6(b).

In particular, as described earlier, one or more processors 102 of the apparatus 100 are configured to control the second virtual user interface 66 to render the second image comprising a modified representation of the eyes 65b of the first user 50, such that the eyes 65b of the first user 50 are directed toward the virtual object 64b in the second image rendered by the second virtual user interface 66 as illustrated in Fig. 6(c). This is in contrast to the eyes 65a of the first user 50 being directed away from the virtual object 64a in the second image rendered by the second virtual user interface 66 as illustrated in Fig. 6(b). Thus, in this example, rather than the second user viewing the first user 50 as looking away from the object 64a as illustrated in Fig. 6(b), the second user actually views the first user 50 as looking at the object 64b as illustrated in Fig. 6(c). For example, the modified representation of the eyes 65b of the first user 50 can follow a reconstructed virtual movement in respect of the virtual object in the second image.

Fig. 7 illustrates an example virtual user interface in use according to an embodiment. The description with respect to Fig. 5 applies also to Fig. 7 and thus will not be repeated here but will be understood to apply. However, in the example illustrated in Fig. 7, one or more processors 102 of the apparatus 100 are configured to control the second virtual user interface 66 to render the second image comprising a modified representation of the whole body of the first user 50 including the part 62b of the body of the first user 50 that performs the gesture.

Specifically, as illustrated in Figs. 6(a) and (c), the modified representation of the whole body of the first user 50 in the second image rendered by the second virtual user interface 66 when using the apparatus 100 described herein comprises a representation of the whole body the first user 50 that is mirrored with respect to the whole body the first user 50. Thus, as illustrated in Figs. 6(b) and (c), the modified representation of the whole body of the first user 50 in the second image rendered by the second virtual user interface 66 when using the apparatus 100 described herein comprises a representation of the whole body the first user 50 that is also mirrored with respect to the whole body the first user 50 in the second image rendered by the second virtual user interface 66 according to existing techniques.

Thus, various examples have been described with respect to Figs. 3-7 to illustrate the use of the apparatus 100 and the implementation of the method 200 described herein. However, it will be understood that other examples are also possible.

There is also provided a computer program product comprising a computer readable medium. The computer readable medium has computer readable code embodied therein. The computer readable code is configured such that, on execution by a suitable computer or processor, the computer or processor is caused to perform the method described herein. The computer readable medium may be, for example, any entity or device capable of carrying the computer program product. For example, the computer readable medium may include a data storage, such as a ROM (such as a CD-ROM or a semiconductor ROM) or a magnetic recording medium (such as a hard disk). Furthermore, the computer readable medium may be a transmissible carrier, such as an electric or optical signal, which may be conveyed via electric or optical cable or by radio or other means. When the computer program product is embodied in such a signal, the computer readable medium may be constituted by such a cable or other device or means. Alternatively, the computer readable medium may be an integrated circuit in which the computer program product is embedded, the integrated circuit being adapted to perform, or used in the performance of, the method described herein.

There is thus provided herein an improved apparatus 100, method 200, and computer program product for rendering an image on a virtual user interface of an AR or VR device, which addresses the limitations associated with the existing techniques. Although the apparatus 100, method 200, and computer program product have been described herein in relation to a first user and a second user, it will be understood that the apparatus 100, method 200, and computer program product can be used in respect of two or more users.

The improved apparatus 100, method 200, and computer program product may be useful in a variety of situations and, in particular, any multi-user setting, such as in a healthcare or clinical setting. Examples include a setting where two or more users face each other on opposite sides of a patient bed, a setting where two or more users face each other in a multidisciplinary board meeting (such as for operation planning, cardiologic interventions or oncology, e.g. where practitioners discuss medical images or visualizations of organs). Other settings in which the improved apparatus 100, method 200, and computer program product can be useful include, for example, a hospital department (e.g. a ward, an intensive care unit (ICU), an operating room, an emergency room (ER), and/or any other hospital department), board meetings (e.g. cardiology board meetings, oncology board meetings and/or any other board meetings), care at home, medical centers, factories, office environments, educational environments (e.g. schools, universities, etc.) or any other settings. The improved apparatus 100, method 200, and computer program product can be useful in any situation where data (e.g. health data) is shared and/or discussed in a virtual space.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. An apparatus (100) for rendering an image on a virtual user interface of an augmented reality, AR, device or a virtual reality, VR, device, the apparatus (100) comprising:
one or more processors (102) configured to:
acquire, from at least one sensor (104), information indicative of a movement of a first user (10, 30, 50);
detect, from the acquired information, a gesture performed by a part (12, 32, 52) of the body of the first user (10, 30, 50) in relation to a virtual object (14, 34, 54) in a first image rendered on a first virtual user interface (16, 36, 56) of a first AR or VR device used by the first user (10, 30, 50); and
control a second virtual user interface (26, 46, 66) of a second AR or VR device used by a second user facing the first user (10, 30, 50) to render a second image comprising a modified representation of the virtual object (24, 64b) and/or a modified representation of at least the part (22b, 42b, 62b) of the body of the first user (10, 30, 50) that performs the gesture, such that the gesture performed by the part (22b, 42b, 62b) of the body of the first user (10, 30, 50) is in relation to the virtual object (24, 44, 64b) in the second image.

2. The apparatus (100) as claimed in claim 1, wherein:
the modified representation of the virtual object (24, 64b) in the second image comprises a representation of at least a part of the virtual object that is mirrored and/or offset with respect to the virtual object (14, 54) in the first image; and/or
the modified representation of at least the part (22b, 62b) of the body of the first user (10, 50) that performs the gesture in the second image comprises a representation of at least the part of the body the first user (10, 50) that performs the gesture that is mirrored and/or offset with respect to at least the part (12, 52) of the body the first user (10, 50) that performs the gesture.

3. The apparatus (100) as claimed in any of the preceding claims, wherein:
one or more processors (102) are configured to:
control the second virtual user interface (26, 46, 66) to render at least the part of the body of the first user (10, 30, 50) that performs the gesture in the second image replaced with the modified representation of at least the part (22b, 42b, 62b) of the body of the first user (10, 30, 50) that performs the gesture.

4. The apparatus (100) as claimed in any of the preceding claims, wherein:
one or more processors (102) are configured to:
control the second virtual user interface (26, 66) to render the second image with the virtual object (24, 64b) located at a modified position in the second image compared to the positon of the virtual object (14, 54) in the first image; or
control the second virtual user interface (26, 66) to render the second image with at least the part (22b, 62b) of the body of the first user (10, 50) that performs the gesture located at a modified position in the second image compared to the positon of at least the part (12, 52) of the body of the first user (10, 50) that performs the gesture.

5. The apparatus (100) as claimed in any of the preceding claims, wherein:
one or more processors (102) are configured to:
control the second virtual user interface to render the second image with the virtual object orientated at a modified orientation in the second image compared to the orientation of the virtual object in the first image; and/or
control the second virtual user interface (26) to render the second image with at least the part (22b) of the body of the first user (10) that performs the gesture orientated at a modified orientation in the second image compared to the orientation of at least the part (12) of the body of the first user (10) that performs the gesture.

6. The apparatus (100) as claimed in any of the preceding claims, wherein:
one or more processors (102) are configured to:
control the second virtual user interface (46, 66) to render the second image with the part (42b, 62b) of the body of the first user (30, 50) that performs the gesture moving in a modified direction (48b, 68b) in the second image compared to the direction (38, 58) in which the part (32, 52) of the body of the first user (30, 50) that performs the gesture moves.

7. The apparatus (100) as claimed in claim 6, wherein:
the modified direction (48b) of the part (42b) of the body of the first user (30) that performs the gesture in the second image is opposite to the direction (38) in which the part (32) of the body of the first user (30) that performs the gesture moves.

8. The apparatus (100) as claimed in any of the preceding claims, wherein:
one or more processors (102) are configured to:
control the second virtual user interface (26, 46, 66) to render the second image with altered pixels to render the second image comprising the modified representation of the virtual object (24, 64b) and/or the modified representation of at least the part (22b, 42b, 62b) of the body of the first user (10, 30, 50) that performs the gesture.

9. The apparatus (100) as claimed in any of the preceding claims, wherein:
one or more processors (102) are configured to:
control the second virtual user interface (66) to render the second image comprising a modified representation of the eyes (60b) of the first user (50), such that the eyes (65b) of the first user (50) are directed toward the virtual object (64b) in the second image.

10. The apparatus (100) as claimed in any of the preceding claims, wherein:
one or more processors (102) are configured to:
control the second virtual user interface (66) to render the second image comprising a modified representation of the whole body of the first user (50) including the part (62b) of the body of the first user (50) that performs the gesture.

11. The apparatus (100) as claimed in any of the preceding claims, wherein:
the first AR or VR device comprises a first pair of AR or VR glasses worn by the first user (10, 30, 50); and/or
the second AR or VR device comprises a second pair of AR or VR glasses worn by the second user.

12. The apparatus (100) as claimed in any of the preceding claims, wherein:
the at least one sensor (104) comprises any one or more of:
one or more cameras of the first AR or VR device used by the first user (10, 30, 50); and
one or more wearable sensors worn on the part (12, 32, 52) of the body of the first user (10, 30, 50) that performs the gesture.

13. The apparatus (100) as claimed in any of the preceding claims, wherein:
the gesture comprises a gesture having a horizontal displacement and/or a vertical displacement.

14. A computer-implemented method (200) for rendering an image on a virtual user interface of an augmented reality, AR, device or a virtual reality, VR, device, the method comprising:
acquiring (202), from at least one sensor, information indicative of a movement of a first user;
detecting (204), from the acquired information, a gesture performed by a part of the body of the first user in relation to a virtual object in a first image rendered on a first virtual user interface of a first AR or VR device used by the first user; and
controlling (206) a second virtual user interface of a second AR or VR device used by a second user facing the first user to render a second image comprising a modified representation of the virtual object and/or a modified representation of at least the part of the body of the first user that performs the gesture, such that the gesture performed by the part of the body of the first user is in relation to the virtual object in the second image.

15. A computer program product comprising a computer readable medium, the computer readable medium having a computer readable code embodied therein, the computer readable code being configured such that, on execution by a suitable computer or processor, the computer or processor is caused to perform the method as claimed in claim 14.
